(19) Europäisches Patentamt

European Patent Office

Office européen des brevets

(11) **EP 1 462 970 A2**

(12) **EUROPEAN PATENT APPLICATION**

(43) Date of publication:
**29.09.2004 Bulletin 2004/40**

(51) Int Cl.7: **G06F 17/60**

(21) Application number: **03014080.0**

(22) Date of filing: **23.06.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Iida, Hiroyuki**<br>  **Hamamatsu-shi, Shizuoka-ken (JP)**<br>• **Hashimoto, Tsuyoshi**<br>  **Hamamatsu-shi, Shizuoka-ken (JP)**<br>• **Nagashima, Jun**<br>  **Hamamatsu-shi, Shizuoka-ken (JP)** |
| (30) Priority: **28.03.2003 JP 2003091750** | |
| (71) Applicant: **President of Shizuoka University**<br>**Shizuoka-shi, Shizuoka-ken (JP)** | (74) Representative: **Hertz, Oliver, Dr.**<br>**v. Bezold & Sozien,**<br>**Akademiestrasse 7**<br>**80799 München (DE)** |

(54) **Pairing apparatus, method, and program**

(57)     In each embodiment of this invention, a pairing apparatus (10, 10x) has a random pairing module (17) which generates pairings from the first to $(r_1)$-th rounds by the random system, and a modified Swiss pairing module (18) which generates pairings from the $(r_1+1)$-th to r-th rounds by the modified Swiss system. When first several matches are paired by the random system, win points are distributed to respective participating teams in accordance with their merits. For this reason, by subsequent pairings of the modified Swiss system, participating teams can be successfully paired within a close merit range. Hence, the total win points (ranks) can reflect the merits. For this reason, the reverse phenomenon of merits and ranks can be suppressed without using the round-robin system.

FIG.1

## Description

The present invention relates to a pairing apparatus, method, and program, which pair teams for matches and, more particularly, to a pairing apparatus, method, and program, which can suppress a reverse phenomenon in which merits and ranks are reversed.

In tournaments of sports, board games, and the like, a pairing system is important since ranks are determined according to merits. As a pairing system, for example, a tournament system, round-robin system, modified Swiss system (for example, see reference 1), random system, and World Cup qualifying system (FIFA system) are known.

[Reference 1]

"First qualifying round of World Computer Shogi Championship", Computer Shogi Association, Internet <URL: http://www.computer-shogi.org/wcsc12/lower.html>

In the tournament system, a defeated team is eliminated for each match of two teams, and a champion is determined by a match of two teams which finally remain in the competition.

In the round-robin system, all teams meet other remaining teams at least once.

In the modified Swiss system, winners are basically paired. More specifically, the modified Swiss system is as follows (for example, see reference 2).

[Reference 2]

"The 12th World Computer Shogi Championship Announcement", Computer Shogi Association, Internet <URL:
http://www.computer-shogi.org/wcsc12/youryou.html>

The modified Swiss system is based on the following procedures (m1) to (m4).

(m1) In the first round, pairing is made in the same manner as the Swiss system to be described later.
(m2) In the second round, pairing is made using the Swiss system under the assumption that top rankers won in the first round.
(m3) In the third and subsequent rounds, pairing is made using the Swiss system on the basis of outcomes until the second previous round (two rounds before), except for the final round.
(m4) In the final round, pairing is made using the Swiss system on the basis of outcomes until the previous round (one round before).

Note that the Swiss system is based on the following procedures (s1) to (s4).

(s1) In the first round, teams are divided into a first group higher than the middle rank and a second group lower than the middle rank, and the first team in the first group meets the first team in the second group. Then, the second team in the first group meets the second team in the second group. Likewise, the n-th team in the first group meets the n-th team in the second group.
(s2) In the second and subsequent rounds, a winning team wins 1 win point, a drawn team wins 1/2 win point, and a defeated team wins 0 win point. Then, total win points of respective teams are used as scores, and teams with equal scores are grouped. After that in the groups of equal scores, pairing is made in the same manner as the first round.
(s3) If the number of teams with an equal score is odd, the middle team in that group meets the first-rank team in the next-score group.
(s4) Teams which have already met are not paired. In such case, a team meets a team with the next rank in the lower-score group.

In the random system, pairing is made using only random numbers, and such system is used in, e. g., tournament pairing.

The World Cup qualifying system is used in preliminary rounds of the known World Cup Soccer. More specifically, respective teams are divided into leagues, and round-robin matches are made in each league. Then, top-rank teams in the leagues are qualified.

In any of the aforementioned pairing systems, a system that can equally reflect merits is desired. Under the circumstances, a system which seems optimal is selected by trial and error on the basis of limitations such as the management period of the tournament, the nature of event, and the like.

However, in the aforementioned pairing systems, a reverse phenomenon in which a weak team is ranked higher than a strong team occurs depending on the generated pairing.

For example, in the tournament system and World Cup qualifying system, since strong teams often gather in an identical group, the reverse phenomenon readily occurs. In the modified Swiss system, experience shows that the reverse phenomenon hardly occurs. In the random system, the reverse phenomenon hardly occurs, but disproportionate pairings (e.g., all strong teams meet weak teams) may be generated.

In either case, the reverse phenomenon is preferably suppressed since such phenomenon may discredit the tournament if it is conspicuous.

On the other hand, since, for example, the round-robin system is independent from pairing, the reverse phenomenon hardly occurs. However, in the round-robin system, the number of matches extremely increases in accordance with the number of participating teams. Hence, the round-robin system is not preferred in preliminary rounds with many participating teams.

It is an object of the present invention to provide a pairing apparatus, method, and program, which can suppress a reverse phenomenon in which merits and ranks are reversed without using the round-robin system.

According to a first aspect of the present invention, there is provided a pairing apparatus for generating pairings used to hold matches of pairs of a plurality of participating teams, comprising pairing storage means for storing match results in association with the generated pairings, setting means for setting the number $r_1$ of rounds from first to $(r_1)$-th rounds and the number $r_2$ of rounds from $(r_1+1)$-th to r-th rounds of the matches, first pairing means for sequentially or simultaneously generating pairings from the first to $(r_1)$-th rounds by a random system on the basis of the set number $r_1$ of rounds, and writing the generated pairings in the pairing storage means, second pairing means for sequentially generating pairings from the $(r_1+1)$-th to r-th rounds by a modified Swiss system on the basis of the match results in the pairing storage means, and writing the generated pairings in the pairing storage means, and output means for outputting storage contents of the pairing storage means.

In this way, in the first aspect of the present invention, pairings from the first round to the $(r_1)$-th round are generated by the random system, and pairings from the $(r_1+1)$-th round to the r-th round are generated by the modified Swiss system.

If pairings generated by the random system are proportionate, and participating teams are randomly paired, win points are distributed to the participating teams according to their merits. For this reason, participating teams can be successively paired within a close merit range. Hence, the total win points (ranks) can reflect the merits.

If pairings generated by the random system are disproportionate, and a specific team meets many weak teams, win points are disproportionately distributed to that specific team. However, even in such case, the disproportionate win points can be distributed by modified Swiss pairings.

As described above, according to the first aspect of the present invention, since the random system and modified Swiss system are combined, the reverse phenomenon in which merits and ranks are reversed can be suppressed without using the round-robin system.

This summary of the invention does not necessarily describe all necessary features so that the invention may also be a sub-combination of these described features.

The invention can be more fully understood from the following detailed description when taken in conjunction with the accompanying drawings, in which:

    FIG. 1 is a block diagram showing the arrangement of a pairing apparatus according to the first embodiment of the present invention;

FIG. 2 is a block diagram showing the arrangement of a modification of the first embodiment;

FIG. 3 shows the configuration of a participating team storage module in the first embodiment;

FIG. 4 shows the configuration of a pairing storage module in the first embodiment;

FIG. 5 is a flow chart for explaining the operation in the first embodiment;

FIG. 6 is a graph showing the simulation test results of the system of the first embodiment and other systems by comparison;

FIG. 7 is a block diagram showing the arrangement of a pairing apparatus according to the second embodiment of the present invention;

FIG. 8 is a flow chart for explaining the operation in the second embodiment;

FIG. 9 is a graph showing the simulation test results of pairing systems as the precondition of respective embodiments of the present invention by comparison;

FIG. 10 is a graph showing the simulation test results of pairing systems as the precondition of respective embodiments of the present invention by comparison; and

FIG. 11 is a graph showing the simulation test results of pairing systems as the precondition of respective embodiments of the present invention by comparison.

Preferred embodiments of the present invention will be described hereinafter. Prior to the description, simulation tests as the precondition of respective embodiments will be explained. In this specification, "participating team" means a group of at least one participant. For example, "participating team" includes a case wherein one team includes one participant. The reason why "participating team" is used is to clarify the meaning of "the number of participating teams". That is, if "participant" is used, it is indefinite if "the number of participants" corresponds to either "the number of teams" or "the number of teams $\times$ the number of team members".

(Simulation Test)

When the number of participating teams and the number of rounds are given, it is appropriate to select a pairing system that can easily reflect merits of teams. For this reason, the present inventors set ratings that show merits for respective teams, and conducted simulation tests to probabilistically determine winning teams in accordance with the ratings.

The simulation tests were derived from the known World Computer Shogi Championship (see references 1 and 2 above).

The World Computer Shogi Championship is the world's biggest championship of computer Shogi hosted by CSA (Computer Shogi Association). The 2002 World Computer Shogi Championship took three days to play games as follows due to many participating teams.

First day (first qualifying round): 7 rounds of the modified Swiss tournament of 32 teams

Second day (second qualifying round): 9 rounds of the modified Swiss tournament of 16 seeded teams and 8 teams that qualified the first qualifying round (a total of 24 teams)

Third day (third qualifying round): round-robin games of 3 seeded teams (top 3 of the last tournament) and 5 teams that qualified the second qualifying round

The first and second qualifying rounds must adopt a system that allows stronger teams to be easily qualified, since the strongest team does not always win all their games but the strongest team must be selected. Therefore, in this case, the modified Swiss system was verified by simulating the second qualifying round. In this verification, assume that top 5 of 24 teams were qualified. Also, ratings were used to probabilistically determine winning teams according to their merits. As for a general description of the ratings, please refer to, e. g., digital technical information ("About rating shogi", Shogi Club 24, Internet <URL: http://www.shogidojo. com/rating.htm>) or the like.

The ratings used in the simulation tests will be explained.

(Rating and Winner Determination)

The Elo rating system defines that the winning percentage of a higher-rated player with a 200-point difference is about 76%. In the simulation test, however, winning percentage W of a higher-rated player with a 200-point difference is defined to 75% for the sake of simplicity. Winning percentage W of a higher-rated player is calculated by:

$$W = 1 - \frac{1}{3^{\frac{D}{200}} + 1} \qquad (1)$$

where D: the difference between the ratings of players.
A winner is determined in accordance with the following procedures (1) to (5).

(1) Rating difference D between the first and second moves is calculated.
(2) Winning percentage W of the first move is calculated to four places of decimals (by rounding off the fifth decimal digit), and is multiplied by 10,000 to obtain determination value m. Determination value m falls within the range from 0 to 10,000.
(3) If determination value m = 10,000 (= 100% winning percentage of the first move), it is determined that the first move is a winner; if determination value m = 0, it is determined that the second move is a winner.
(4) Random number R is generated to fall within the range from 0 to 9999.
(5) If R < m, the first move is a winner; if R ≥ m, the second move is a winner.

(Generation of Rating)

In the World Computer Shogi Championship, the ratings of the participating teams are not open to the public. For this reason, appropriate ratings must be given in the simulation tests. Initially, a possible rating range is determined, and ratings are given to respective teams within that range.

The simulation tests were conducted using three different rating ranges, i.e., 250, 500, and 1,000. For example, in case of the rating range = 500, ratings are given to respective participating teams so as to be distributed between 750 and 1,250 points to have 1,000 points as the center.

Winner determination is not influenced by the absolute values of ratings since it uses rating difference D. For example, difference D = 100 between 1,000 and 1,100 points, and difference D = 100 between 1,500 and 1,600 points are not discriminated in equation (1).

In order to examine the influences of rating distributions in addition to the rating range, simulation tests were conducted using various distributions.

More specifically, an equal-interval distribution, uniform distribution, and normal distribution were examined.

In the equal-interval distribution, ratings are distributed at equal intervals.

In the uniform distribution, ratings are distributed using uniform random numbers within a given range.

In the normal distribution, ratings are distributed using random numbers according to the normal distribution. More specifically, pseudo normal random numbers obtained by adjusting the sum of 12 random numbers (not less than 0 and less than 1) to the rating range are used.

Since the uniform and normal distributions use random numbers, three different distributions are prepared for each of these distributions. That is, a total of seven different distribution methods were prepared. Also, three different rating ranges were prepared. Therefore, a total of 21 different distribution methods were prepared.

(Pairing System)

Simulation tests were conducted for a total of four systems, i.e., the modified Swiss system to be verified, and the round-robin system, random system, and World Cup qualifying system to be compared. Since the contents of the respective systems have already been explained above, a supplementary explanation will be given below.

[Round-robin System]

In the round-robin system, there are 23 matches since all 24 teams meet all other teams. The round-robin system can reflect merits most easily compared to other systems that produce outcomes by a fewer number of matches. In other words, other systems may have higher performance as they produce outcomes closer to that of the round-robin system. That is, the round-robin system is used as a reference upon comparing various other pairing systems.

[Modified Swiss System]

The modified Swiss system is adopted in the World Computer Shogi Championship, and is the most popular pairing system. Upon conducting the simulation tests, a test program was built in a pairing module of a program used in the World Computer Shogi Championship without any modifications.

[Random System]

In the random system, pairings are generated using only random numbers, as described above. Nine rounds are made.

[World Cup Qualifying System]

This system is a qualifying system of the known World Cup Soccer finals. Teams are divided into leagues to hold league matches, and some top rankers of the leagues are qualified. Since there are 24 teams, they are divided into three leagues to respectively hold seven matches. A total of five teams, i.e., the first-place teams (three teams) of the respective leagues, and two out of three second-place teams, which have higher win points (= winning percentages), are qualified. Teams are divided into leagues as follows. That is, teams are distributed to league 1, league 2, league 3, league 3, league 2, league 1, league 1, league 2, ... in descending order of rating.

(Simulation Test)

The tests are conducted in the following procedures (e1) to (e3).

(e1) Ratings are generated.
(e2) Using the generated ratings, 100,000 simulation tests are conducted for each rating distribution of each pairing system.
(e3) Qualified counts of the 100,000 tests are calculated for respective pairing systems.

The above simulation tests simulated nine rounds. In addition, since there are seven matches of the World Cup qualifying system, seven matches of each of the random system and modified Swiss system were simulated for the purpose of comparison. Since there are seven matches in the first qualifying round of the World Computer Shogi Championship, these data can serve as a reference.

(Selection of Distribution Method)

The 21 different distribution methods had small tendency differences. However, the method with the rating range = 500 exhibited clear differences depending on pairing systems compared to that with the rating range = 250 or 1,000. More specifically, difference D was too small in the rating range = 250, and was too large in the rating range = 1,000. As the distribution method, the normal distribution is close to a practical one compared to the equal-interval distribution and uniform distribution. For this reason, the results obtained using the rating range = 500 and the normal distribution are selected as a typical example, and will be described below.

(Simulation Result)

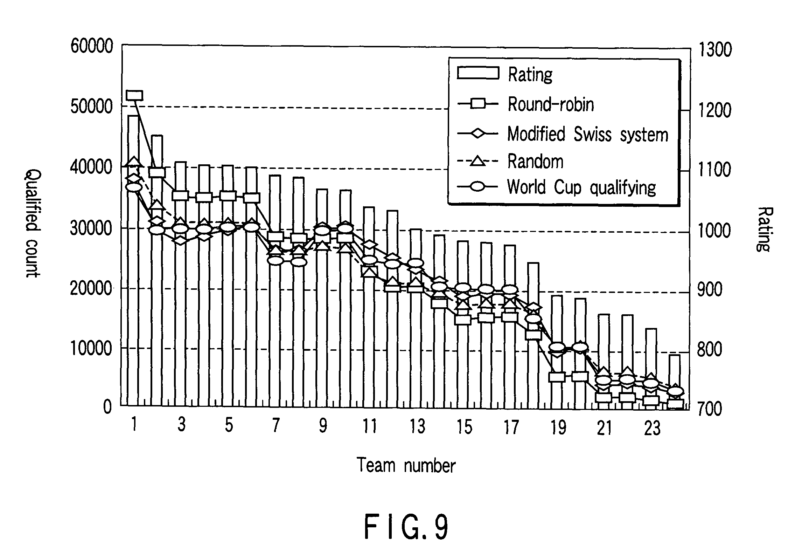

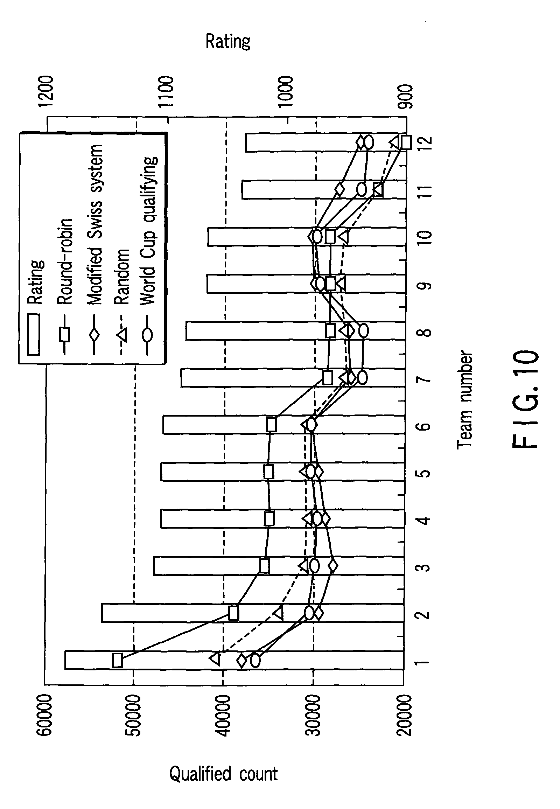

FIG. 9 shows the simulation test results of the respective pairing systems by comparison, and FIG. 10 shows the upper part of FIG. 9 in an enlarged scale. This simulation uses the rating range = 500 and normal distribution as conditions. In FIGS. 9 and 10, the left ordinate plots the qualified count, and the right ordinate plots the rating. The abscissa plots team numbers assigned in descending order of rating.
Also, the bar graph represents the ratings of the respective teams, and the line chart represents the qualified counts using the respective pairing systems.
As shown in FIGS. 9 and 10, teams #2 to #6 have nearly the same ratings, and also nearly equal qualified counts of the round-robin system.
However, in the modified Swiss system, the reverse phenomenon of the merits and qualified counts has occurred in teams #3 to #6. Teams #7 and #8 have considerably small qualified counts. Again, the reverse phenomenon has occurred in team #9 and subsequent teams.
To summarize, the modified Swiss system yields considerably irregular results.
On the other hand, the results of the World Cup qualifying system are not so irregular compared to the modified Swiss system, but the qualified counts of teams #7 and #8 are considerably small.
In the round-robin system, the qualified counts of teams #1 to #9 are larger than those of other systems, and the qualified counts of team #10 and subsequent teams are smaller than those of other systems.
In the random system, the qualified counts are statistically closest to those of the round-robin system.

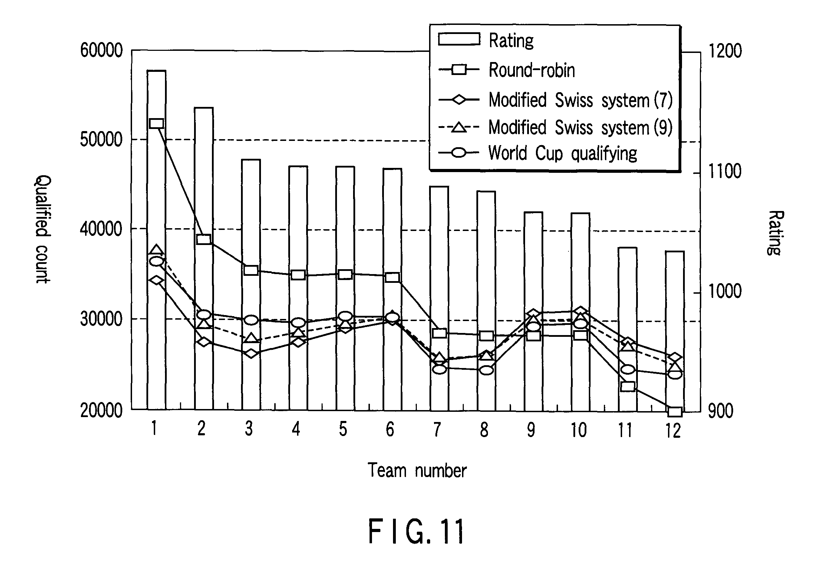

FIG. 11 is a graph that includes the results of the modified Swiss system that holds only seven matches. Since the results of the seven matches using the random system are nearly the same as those of nine matches, they are not shown. The results of seven matches using the modified Swiss system are farther from those of the round-robin system compared to the results of nine matches.

(Whole Simulation Result)

The test results of all 21 different distributions will be summarized below.

In the modified Swiss system, random system, and World Cup qualifying system, the qualified counts of several higher-rated teams are smaller than those of the round-robin system, and the qualified counts of lower-rated teams are larger than those of the round-robin system.

In the modified Swiss system, the qualified counts of lower-rated teams are often larger than those of higher-rated teams.

In the World Cup qualifying system, the qualified counts of lower-rated teams are often extremely larger than those of higher-rated teams.

The random system can yield results closest to those of the round-robin system in all rating distributions.

With the above results, the present inventors examined the tendencies of respective pairing systems as follows.

[Tendency of Modified Swiss System]

With the modified Swiss system, the reverse phenomenon often appears. This is because higher-rated teams are paired frequently. For example, in the modified Swiss system, since an opponent is determined depending on wins, if a given team loses in an earlier match, that team may meet softer teams; if the team is defeated by a strong contestant, it suffers a loss. However, since the modified Swiss system pairs teams with closer merits in the second and subsequent rounds, higher-rated teams are harder to get win points, and lower-rated teams are easier to get win points. As a result, the qualified counts of lower-rated teams increase.

[Tendency of Random System]

The random system has a tendency statistically closest to that of the round-robin system, and has fewer problems among the four systems. However, with the random system, disproportionate pairings (e.g., all strong teams meet weak teams) may be generated in each tournament. For this reason, the random system is a statistically decent one, but it is unsure to adopt that system in the annual tournament.

[Tendency of World Cup Qualifying System]

In the World Cup qualifying system, the influences of leagues grouped initially are too strong, and considerably irregular results are often obtained.

Respective embodiments will be explained below on the premise of the aforementioned simulation results. Each embodiment adopts the random system in some early rounds, and the modified Swiss system in subsequent rounds to compensate for the drawbacks of these systems. The first embodiment will explain a practical example of this combined system, and the second embodiment will set an appropriate number of rounds in this practical example.

(First Embodiment)

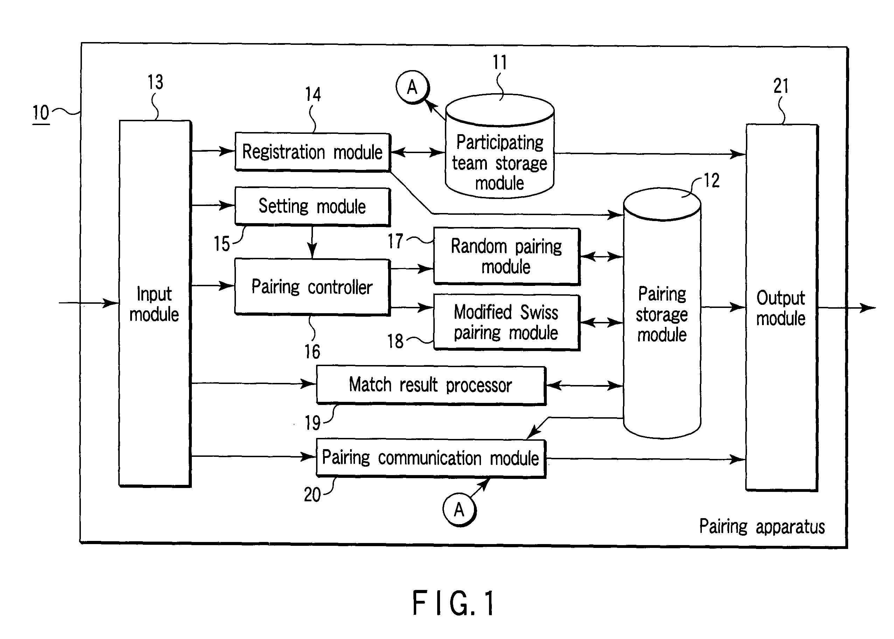

FIG. 1 is a block diagram showing the arrangement of a pairing apparatus according to the first embodiment of the present invention. This pairing apparatus 10 comprises a participating team storage module 11, pairing storage module 12, input module 13, registration module 14, setting module 15, pairing controller 16, random pairing module 17, modified Swiss pairing module 18, match result processor 19, pairing communication module 20, and output module 21.

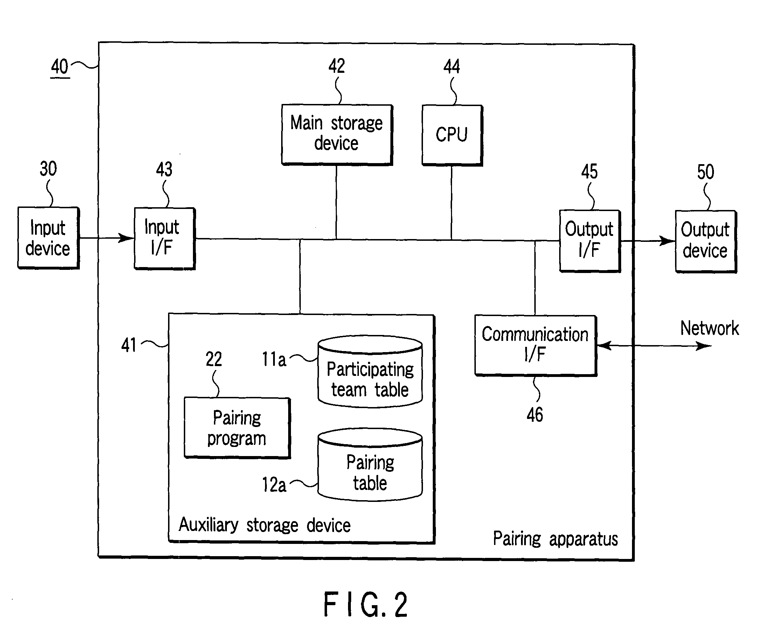

In the pairing apparatus 10, each of the functional modules 13 to 21 can be implemented by the hardware arrangement and/or the software arrangement. For example, when the functional modules 13 to 21 are implemented by the software arrangement, a pairing apparatus 40 is implemented as a computer in which an auxiliary storage device 41, main storage device 42, input I/F 43, CPU 44, output I/F 45, and communication I/F 46 are connected to each other via a bus, as shown in FIG. 2.

More specifically, the pairing apparatus 40 is implemented by installing a pairing program 22 that implements the functions of the functional modules 13 to 21 from a storage medium (not shown) or a network in advance. Upon executing the pairing program 22, a participating team table 11a and pairing table 12a corresponding to the participating team storage module 11 and pairing storage module 12 in FIG. 1 are created in the main storage device 42. The tables 11a and 12a are saved in the auxiliary storage device 41 upon completion of the process. Note that an input device 30 in FIG. 2 comprises a keyboard, mouse, and the like, which are connected to the input I/F 43, and an output device 50 comprises a display device, printer, and the like, which are connected to the output I/F 45.

In this way, the arrangement shown in FIG. 1 can be implemented as that shown in FIG. 2 and the same applies to the following embodiments.

The functional modules 11 to 21 of the pairing apparatus 10 shown in FIG. 1 will be described below.

The participating team storage module 11 is a memory area that stores a participating team table which is registered by the registration module 14 and can be read out from the output module 21.

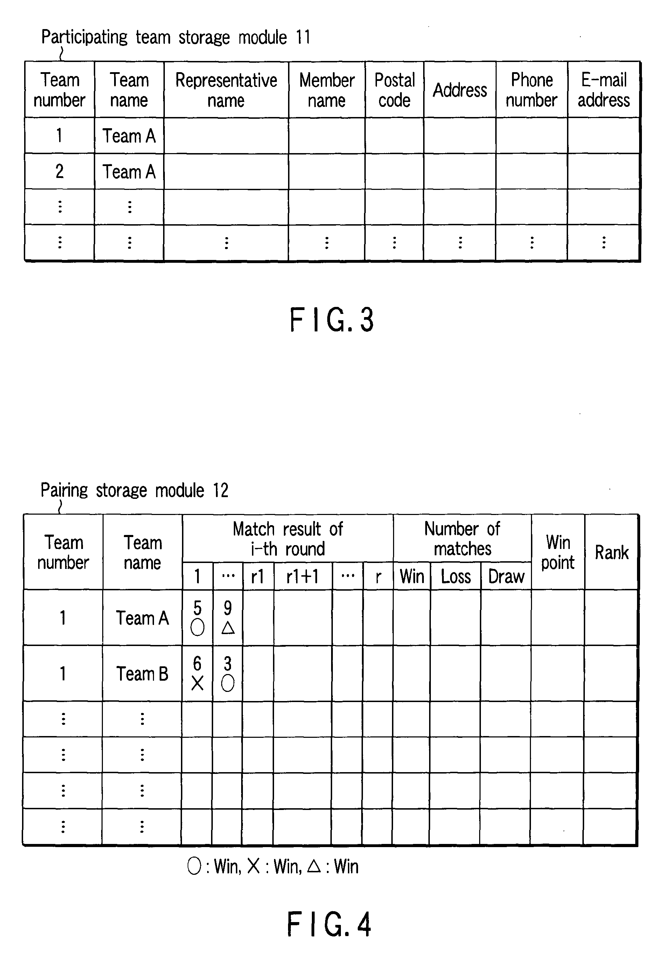

More specifically, the participating team storage module 11 stores data of respective participating teams in team number, team name, representative name, member name, postal code, address, phone number, and e-mail address fields, as shown in FIG. 3.

The pairing storage module 12 is a memory area that stores a pairing table in which the team numbers and team names are registered by the registration module 14, pairings of respective rounds are registered by the two pairing modules 17 and 18, and match results and the like are written/read out by the match result processor 19, and which can be read out from the pairing communication module 20 and output module 21.

The pairing storage module 12 stores data of respective participating teams in fields of team number, team name, match results from the first to r-th rounds, the number of winning matches, the number of defeated matches, the number of drawn matches, total of win points, and rank, as shown in FIG. 4. In the match result fields, $\bigcirc$ indicates win, $\times$ indicates loss, and $\Delta$ indicates draw. A numeral above $\bigcirc$, $\times$, and $\Delta$ indicates the team number of an opponent.

The input module 13 selects the registration module 14, setting module 15, pairing controller 16, match result processor 19, or pairing communication module 20 upon operation of the operator, and inputs data and/or commands to the selected one of the functional modules 14 to 20.

The registration module 14 has a function of creating a participating team table and storing it in the participating team storage module 11 in accordance with operator's operations, and a function of creating a default pairing table on the basis of the participating team table, and storing it in the pairing storage module 12, when it is selected from the input module 13. Note that the default pairing table stores only the team numbers and team names, but does not store any pairings yet.

The setting module 15 receives the number n of participating teams and the number t of teams to be picked out, which are input by the operator, when it is selected from the input module 13, and sets the number $r_1$ of rounds from the first to $(r_1)$-th rounds, and the number $r_2$ of round from the $(r_1+1)$-th to r-th rounds of matches of these teams. These numbers of rounds can be read out from the pairing controller 16.

The pairing controller 16 has a function of launching, when it is selected from the input module 13, and receives a message indicating that the next round is the i-th round ($1 \leq i \leq r$) from the operator, the random pairing module 17 if this i-th round is one of the first to $(r_1)$-th rounds, and launching the modified Swiss pairing module 18 if the i-th round is one of the $(r_1+1)$-th to r-th rounds, with reference to the setting module 15.

The random pairing module 17 is launched by the pairing controller 16, and has a function of sequentially or simultaneously generating pairings from the first to $(r_1)$-th rounds by the random system, and writing the obtained pairings in the pairing table in the pairing storage module 12.

The modified Swiss pairing module 18 is launched by the pairing controller 16, and has a function of sequentially generating pairings from the $(r_1+1)$-th to r-th rounds by the modified Swiss system, and writing the obtained pairings in the pairing table in the pairing storage module 12.

Note that each of the pairing modules 17 and 18 has a function of checking if the generated pairings include the same matches as previous ones, and re-generating pairings if such matches are found, so as to avoid the same matches as previous ones.

Also, each of the pairing modules 17 and 18 may have a function of checking if the generated pairings include matches of teams that belong to the same organization by comparing, e.g., the addresses, and re-generating pairings if such matches are found, so as to avoid matches of teams that belong to the same organization.

Note that the same organization means not only a company, school, and the like, but also an organization such as a country, area, and the like with high identity. In order to avoid matches of teams with such identity, for example, discrimination codes such as a country code, area code, and the like may be pre-stored in the participating team storage module 11 and pairing storage module 12.

The match result processor 19 has a function of reading out, when it is selected by the input module 13, the pairing storage module 12 upon operation of the operator, and outputting the obtained pairing table to the output module 21, a function of writing the match results in the pairing table upon operation of the operator, a function of calculating the totals of win points for respective participating teams on the basis of the match results written in the pairing table, and writing the calculated totals in the pairing table, and a function of writing ranks in the pairing table in descending order of calculated total of win points.

The pairing communication module 20 has a function of generating, when it is selected by the input module 13, e-mail messages used to send the contents of the pairing table to the corresponding participating teams on the basis of the e-mail addresses stored in the participating team table of the participating team storage module 11 for respective participating teams, and a function of sending the e-mail messages via the output module 21 upon operation of the operator. Note that the contents of the pairing table to be described in an e-mail message may be one of the following contents (i) to (iii).

(i) Only the participating team name of the next opponent.
(ii) (i) and the match record.
(iii) Full contents of the pairing table.

The pairing communication module 20 is not limited to the arrangement using e-mail, but may be modified to an arrangement using other means such as an instant messenger, phone, FAX, and the like. If such modified arrangement is adopted, the participating team table may store required address information such as IP addresses, phone numbers, FAX numbers, and the like. The pairing communication module 20 may have a voice function that audibly outputs pairings.

The output module 21 is controlled by the respective functional modules 13 to 20, and has an output function of displaying, printing, or transmitting the processing results of the functional modules 13 to 20, the tables in the participating team storage module 11 and pairing storage module 12, and the like.

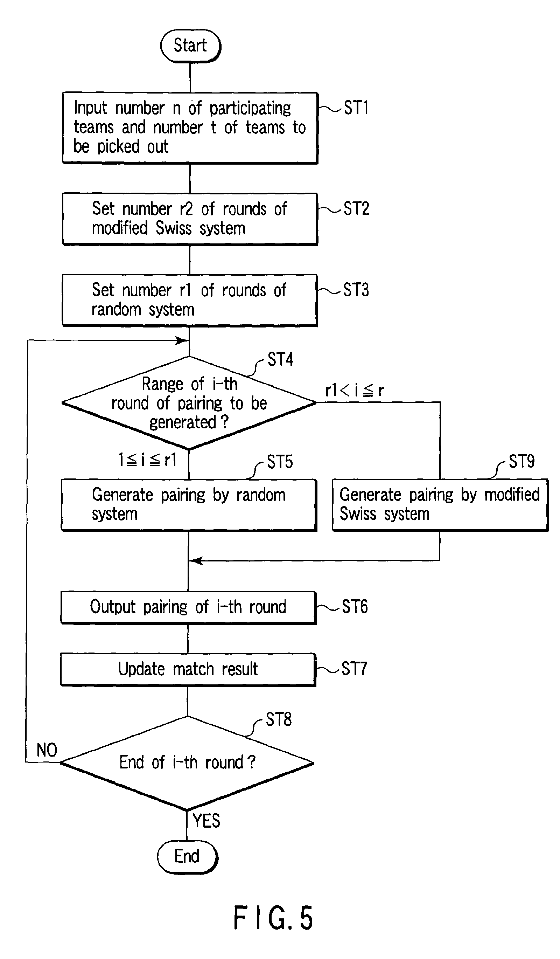

The operation of the pairing apparatus with the above arrangement will be described below using the flow chart in FIG. 5.

(Preparation)

Initially, the input module 13 selects the registration module 14 upon operation of the operator.

The registration module 14 creates a participating team table shown in FIG. 3 and stores it in the participating team storage module 11 upon operation of the operator. The registration module 14 creates a default pairing table shown in FIG. 4 on the basis of the participating team table, and stores it in the pairing storage module 12, thus ending the process. Note that the default pairing table stores only the team numbers and team names, but does not store any pairings yet.

With the above process, all participating teams are registered in the pairing table, and their pairings are ready to generate. Note that the registration module 14 is not indispensable to the pairing apparatus 10, and may be omitted. For example, the pairing apparatus 10 may generate pairings in an externally provided pairing table.

(Pairing)

The input module 13 selects the setting module 15 upon operation of the operator.

If the setting module 15 is selected by the input module 13, it receives the number n of participating teams and the number t of teams to be picked out, which are input by the operator (ST1). Note that the number n of participating teams can be detected from the pairing table and its input may be omitted.

The setting module 15 sets the number $r_1$ of rounds from the first to $(r_1)$-th rounds, and the number $r_2$ of round from the $(r_1+1)$-th to r-th rounds of matches of these teams (ST2 and ST3), thus ending its process. Note that either of the numbers $r_1$ and $r_2$ of rounds may be set earlier. Also, $r = r_1 + r_2$.

Subsequently, the input module 13 selects the pairing controller 16 in accordance with the operator's operation.

Upon receiving a message indicating that the next round is the i-th round ($1 \leq i \leq r$) from the operator, the pairing controller 16 determines the range of the i-th round with reference to the setting module 15 (ST4).

If the i-th round falls within the range from the first to $(r_1)$-th rounds as a result of this determination, the controller 16 launches the random pairing module 17; if the i-th round falls within the range from the $(r_1+1)$-th to r-th rounds, it launches the modified Swiss pairing module 18.

In this case, since the i-th round falls within the range from the first to $(r_1)$-th rounds, the random pairing module 17 is launched.

The random pairing module 17 sequentially or simultaneously generates pairings from the first to $(r_1)$-th rounds of respective participating teams by the random system (ST5), writes the obtained pairings in the pairing table in the pairing storage module 12, and then outputs the pairing table to the output module 21.

The output module 21 outputs the pairing table by displaying or printing it (ST6). Note that the operator launches the pairing communication module 20 as needed. The pairing communication module 20 generates e-mail messages including the pairing, which are addressed to respective participating teams, on the basis of the pairing table and participating team table, and sends the e-mail messages to the e-mail addresses of respective participating teams via the output module 21.

In this way, the pairing process of the i-th round is completed.

After that, assume that respective participating teams meet and their match results are obtained.

The match result processor 19 writes the match results in the corresponding fields of the i-th round of the pairing table in accordance with the operator's operation (ST7).

As a result, the totals of win points and ranks up to the i-th round are set.

If the r-th round is complete (ST8: YES) upon completion of ST7, all pairing processes end.

On the other hand, if the r-th round is not complete yet (ST8: NO) upon completion of ST7, steps ST4 to ST7 are repeated as in the above processes.

Every time steps ST4 to ST7 are repeated, i is incremented by 1. Hence, if the i-th round has exceeded the $(r_1)$-th round, it is determined in step ST4 that the i-th round falls within the range from $(r_1+1)$-th to r-th rounds.

As a result, the pairing controller 16 launches the modified Swiss pairing module 18 in place of the random pairing module 17.

The modified Swiss pairing module 18 sequentially generates pairings from $(r_1+1)$-th to r-th rounds by the modified Swiss system on the basis of the match results stored in the pairing table of the pairing storage module 12 (ST9), writes the obtained pairings in the pairing table of the pairing storage module 12, and then outputs that table to the output module 21.

That is, since another checking result is obtained in step ST4, step ST9 is executed in place of step ST5 in repetition of steps ST4 to ST7.

As a result, steps ST4, ST9, ST6, and ST7 are executed. If the r-th round is complete (ST8: YES) upon completion of ST7, all pairing processes end.

(Evaluation)

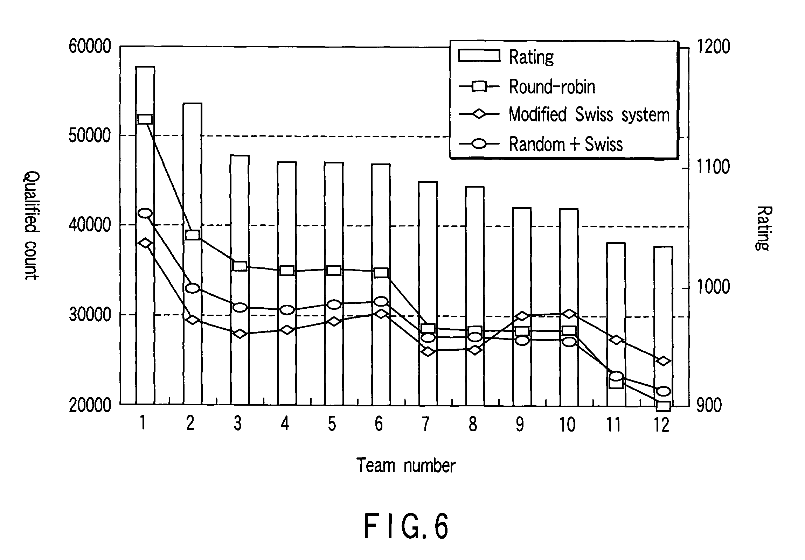

FIG. 6 shows the simulation test results of pairings generated by the system of this embodiment (to be referred to as a random/Swiss combined system hereinafter), and those generated by other systems by comparison. The simulation conditions of the random/Swiss combined system shown in FIG. 6 include the rating range = 500, the normal distribution, and the number $r_1$ of rounds = 3. The conditions of "rating range = 500 and normal distribution" are the same as those in the previously used conditions. The condition of the number $r_1$ of rounds = 3 is adopted as a typical example since the result difference is small when another value $r_1 = 4$ or 5 is used.

As shown in FIG. 6, the results of the random/Swiss combined system are stable without any reverse phenomenon unlike in the modified Swiss system. Also, the results of the random/Swiss combined system are similar to those of the round-robin system, and are statistically very good. Furthermore, since the results of the random/Swiss combined system are always similar to those of the random system, and these results nearly overlap each other, the results of the random system are not shown.

Each individual pairing of the random/Swiss combined system is free from any disproportionate ratings of opponents unlike in the pure random system. This is because the modified Swiss system is used in the latter half of the random/Swiss combined system.

In any case, it is demonstrated that the random/Swiss combined system can meet conditions more satisfactorily than other existing systems, as shown in FIG. 6.

As described above, according to this embodiment, since pairings from the first to $(r_1)$-th rounds are generated by the random system, and pairings from the $(r_1+1)$-th to r-th rounds are generated by the modified Swiss system, the reverse phenomenon of merits and ranks can be suppressed without using the round-robin system.

More specifically, according to the random/Swiss combined system, since the former random system suppresses the reverse phenomenon, and the latter modified Swiss system suppresses disproportionate pairings, proportionate pairings that can reflect merits can be realized.

(Second Embodiment)

The second embodiment of the present invention will be described below. Prior to this description, the appropriate ranges of the numbers $r_1$ and $r_2$ of rounds and their adjustment as the precondition of this embodiment will be explained.

In the following description, let P(n, t, r) be a problem of a pairing system used to hold r rounds of matches of n participating teams in an arbitrary game played by two teams, and to select top t teams with ranks. Also, let $r_1$ be the number of rounds of the random system, and $r_2$ be the number of rounds of the modified Swiss system. Then, we have:

$$r = r_1 + r_2 \qquad (2)$$

This embodiment obtains appropriate values of $r_1$ and $r_2$ in equation (2) against problem P(n, t, r). Note that "appropriate values" can be arbitrary values that fall within a range in which the reverse phenomenon is suppressed.

In order to obtain the minimum number $r_1$ of rounds that does not cause any reverse phenomenon, the aforementioned simulation is executed for problem P(n, t, r) to be practically addressed upon managing the tournament. Note that the aforementioned simulation uses equation (1) and procedures (1) to (5) mentioned above. By repeating the simulation while increasing the number $r_1$ of rounds to 1, 2, 3, 4, ..., the first $r_1$ that does not cause any reverse phenomenon is identified. It is determined that the obtained minimum number $r_1$ of rounds is appropriate if it is smaller than a target upper limit value. That is, the number $r_1$ of rounds need only meet:

$$1 \leqq r_1 \leqq r - \lfloor \log_2 n \rfloor \qquad (3)$$

where $r - \lfloor \log_2 n \rfloor$: the upper limit value of $r_1$.
    $\lfloor \log_2 n \rfloor$: the lower limit value of $r_2$.

Note that the upper limit value of $r_1$ (or the lower limit value of $r_2$) can be empirically obtained by the simulations and the like of the present inventors.

The minimum number $r_1$ of rounds obtained in this way may be adjusted to reflect the theme of tournament management if it falls within the range in which inequality (3) holds.

For example, if the chance of the reverse phenomenon (to rank weak teams higher) is to be increased while suppressing disproportionate pairings, the number $r_1$ of rounds of the random system can be decreased. On the other hand, if the reverse phenomenon is to be suppressed, the number $r_1$ of rounds of the random system can be increased.

Under the aforementioned precondition, the second embodiment of the present invention will be described below.

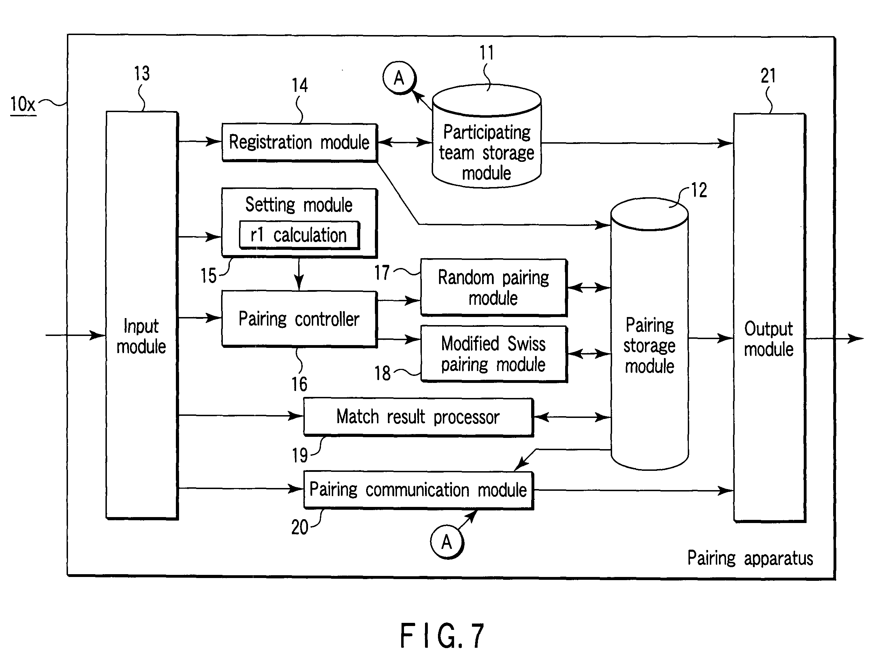

FIG. 7 is a block diagram showing the arrangement of a pairing apparatus according to the second embodiment of the present invention. The same reference numerals in FIG. 7 denote the same parts as those in FIG. 1, and a detailed description thereof will be omitted. Hence, differences from the first embodiment will be mainly explained.

That is, this embodiment is a modification of the first embodiment. More specifically, the pairing apparatus comprises a setting module 15x having a calculation function 23 of calculating the number $r_1$ of rounds of the random system by simulation, as shown in FIG. 7, in place of the setting module 15 in FIG. 1.

The calculation function 23 has a function of calculating an appropriate number $r_1$ of rounds against various problems P(n, t, r) by simulation.

More specifically, the calculation function 23 temporarily sets the number $r_1$ of rounds of the random system to 1 against P(n, t, r), and simulates pairings. In this simulation, winning teams are determined on the basis of ratings assigned to respective participating teams as a result of determination in procedures (1) to (5) above. Note that the ratings adopt the conditions of "rating range = 500 and normal distribution" as in the above description. If the reverse phenomenon has occurred as a result of simulation, the calculation function 23 determines that the current number $r_1$ of rounds is inappropriate, and increments the number $r_1$ of rounds by 1 to execute simulation again. In this way, the calculation function 23 obtains the minimum number $r_1$ of rounds that does not cause any reverse phenomenon by repeating simulation. If the obtained number $r_1$ of rounds meets inequality (3) above, the calculation function 23 sets that number $r_1$ of rounds. Note that this number $r_1$ of rounds can be manually or automatically adjusted in accordance with the theme or tournament management. After the number $r_1$ of rounds is settled, the calculation function 23 calculates the number $r_2$ of rounds based on equation (2) above.

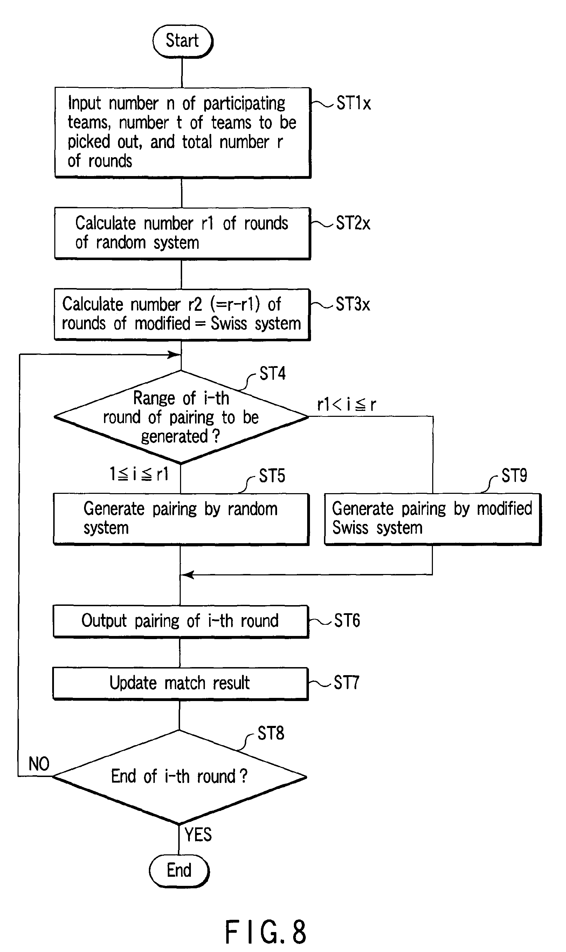

The operation of the pairing apparatus with the above arrangement will be described below using the flow chart in FIG. 8.

Initially, a participating team table and pairing table are created as in the above embodiment.

The input module 13 selects the setting module 15x in accordance with the operator's operation.

If the setting module 15x is selected by the input module 13, it receives the number n of participating teams, the number t of teams to be picked out, and the total number r of rounds, which are input by the operator (ST1x). Note that the number n of participating teams can be detected from the pairing table and its input may be omitted.

In the setting module 15x, the calculation function 23 calculates the number $r_1$ of rounds of the random system by simulation on the basis of the number n of participating teams and the number t of teams to be picked out (ST2x).

After that, in the setting module 15x, the calculation function 23 calculates the number $r_2$ (= r - $r_1$) of rounds of the modified Swiss system by subtracting the number $r_1$ of rounds calculated in step ST2x from the total number r of round in step ST1x (ST3x).

Then, the input module 13 selects the pairing controller 16 in accordance with the operator's operation.

After that, a pairing apparatus 10x executes the aforementioned processes. That is, the pairing apparatus 10x repeats steps ST4 to ST8 via step ST5 in correspondence with the number $r_1$ of rounds, as described above. Then, the pairing apparatus 10x repeats steps ST4 to ST8 via step ST9 in correspondence with the number $r_2$ of rounds, thus ending the process.

As described above, according to this embodiment, the calculation function 23 of the setting module 15x calculates the number $r_1$ of rounds of the random system using simulation in accordance with the number n of participating teams and the number t of top teams to be picked out, the appropriate numbers $r_1$ and $r_2$ of rounds can be set, in addition to the effects of the first embodiment.

Since this embodiment comprises the calculation function 23 that calculates the number of rounds, it is convenient to set the numbers $r_1$ and $r_2$ of rounds of the random and modified Swiss systems without any experience of tournament hosting.

In this embodiment, the calculation function 23 is added to set the appropriate number of rounds. However, the present invention is not limited to this. For example, the arrangement of the second embodiment may be modified to set an appropriate number of rounds by adding a round number table that describes the numbers $r_2$ of rounds on the basis of the numbers n of participating teams and the numbers t of top teams to be picked out. With this modification, the same effect as in this embodiment can be obtained.

Note that the method described in each of the above embodiments can be delivered while being stored, as a program that can be executed by a computer, in a storage media such as a magnetic disk (floppy (trade name) disk, hard disk, or the like), optical disk (CD-ROM, DVD, or the like), magnetooptical disk (MO), semiconductor memory, or the like).

The present invention is not limited to the embodiments described above. When reduced to practice, each of the embodiments described above can be modified in various manners without departing from the spirit of the invention. The embodiments described above can be combined, if so desired. In such a combination, advantages produced may be unique to that combination. It should be noted that the embodiments contain inventions of various stages, and the structural elements of the inventions can be modified to derive other inventions. If an invention is derived by omitting some structural elements from the embodiments, the omitted structural elements can be compensated for with known technology when the derived invention is reduced to practice.

Lastly, the present invention can be modified in various manners without departing from the spirit of the invention.

## Claims

1. A pairing apparatus (10) for generating pairings used to hold matches of pairs of a plurality of participating teams, **characterized by** comprising:

   pairing storage means (12) for storing match results in association with the generated pairings;
   setting means (15) for setting the number $r_1$ of rounds from first to $(r_1)$-th rounds and the number $r_2$ of rounds from $(r_1+1)$-th to r-th rounds of the matches;
   first pairing means (17) for sequentially or simultaneously generating pairings from the first to $(r_1)$-th rounds by a random system on the basis of the set number $r_1$ of rounds, and writing the generated pairings in the pairing storage means;
   second pairing means (18) for sequentially generating pairings from the $(r_1+1)$-th to r-th rounds by a modified Swiss system on the basis of the match results in the pairing storage means, and writing the generated pairings in the pairing storage means; and
   output means (21) for outputting storage contents of the pairing storage means.

2. A pairing method of controlling a pairing apparatus to generate pairings used to hold matches of pairs of a plurality of participating teams, **characterized by** comprising:

   a step of controlling the pairing apparatus to set the number $r_1$ of rounds from first to $(r_1)$-th rounds and the number $r_2$ of rounds from $(r_1+1)$-th to r-th rounds of the matches;
   a step of controlling the pairing apparatus to sequentially or simultaneously generate pairings from the first to $(r_1)$-th rounds by a random system on the basis of the set number $r_1$ of rounds, and to hold the generated pairings;
   a step of controlling the pairing apparatus to hold the held parings and input match results in association with each other upon completion of matches from the first to $(r_1)$-th rounds;
   a step of controlling the pairing apparatus to sequentially generate pairings from the $(r_1+1)$-th to r-th rounds by a modified Swiss system on the basis of the held match results, and to hold the generated pairings; and
   a step of controlling the pairing apparatus to output the held contents on the basis of an input request.

3. A computer program (22) stored in a computer readable storage medium used in a pairing apparatus (40) for generating pairings used to hold matches of pairs of a plurality of participating teams, **characterized by** comprising:

   a first program code of making a computer execute a pairing generation process for creating a pairing table that stores match results in association with the generated pairings and storing the pairing table in a memory;
   a second program code of making the computer execute a setting process for setting the number $r_1$ of rounds from first to $(r_1)$-th rounds and the number $r_2$ of rounds from $(r_1+1)$-th to r-th rounds of the matches;
   a third program code of making the computer execute a first pairing process for sequentially or simultaneously generating pairings from the first to $(r_1)$-th rounds by a random system on the basis of the set number $r_1$ of rounds, and writing the generated pairings in the pairing table;
   a fourth program code of making the computer execute a second pairing process for sequentially generating pairings from the $(r_1+1)$-th to r-th rounds by a modified Swiss system on the basis of the match results in the pairing table, and writing the generated pairings in the pairing table; and
   a fifth program code of making the computer execute an output process for outputting contents of the pairing table on the basis of an input request.

4. The program according to claim 3, **characterized in that** the setting process includes a calculation process for, when top t teams are to be selected from a total of n participating teams, simulating pairings on the basis of ratings assigned to the participating teams under a condition that participating teams with higher ratings probabilistic win, and calculating a minimum number $r_1$ of rounds that does not cause any reverse phenomenon of ratings and ranks.

5. The program according to claim 4, **characterized in that** the calculation process includes a process for setting the number $r_1$ of rounds if the calculated number $r_1$ of rounds meets:

$$1 \leq r_1 \leq r - \lfloor \log_2 n \rfloor$$

**6.** The program according to any one of claims 3 to 5, **characterized in that** the output process comprises a sixth program code of making the computer execute a pairing communication process for transmitting contents of the pairing table to respective participating teams on the basis of address information stored in advance for respective participating teams.

F I G. 1

F I G. 2

EP 1 462 970 A2

Participating team storage module 11

| Team number | Team name | Representative name | Member name | Postal code | Address | Phone number | E-mail address |
|---|---|---|---|---|---|---|---|
| 1 | Team A | | | | | | |
| 2 | Team A | | | | | | |
| ⋮ | ⋮ | | | | | | |
| ⋮ | ⋮ | ⋮ | ⋮ | ⋮ | ⋮ | ⋮ | ⋮ |

# F I G. 3

Pairing storage module 12

| Team number | Team name | Match result of i-th round | | | | | | Number of matches | | | Win point | Rank |
|---|---|---|---|---|---|---|---|---|---|---|---|---|
| | | 1 | ⋯ | r1 | r1+1 | ⋯ | r | Win | Loss | Draw | | |
| 1 | Team A | 5 ◯ | 9 △ | | | | | | | | | |
| 1 | Team B | 6 ✕ | 3 ◯ | | | | | | | | | |
| ⋮ | ⋮ | | | | | | | | | | | |
| ⋮ | ⋮ | | | | | | | | | | | |
| ⋮ | ⋮ | | | | | | | | | | | |
| ⋮ | ⋮ | | | | | | | | | | | |

◯ : Win, ✕ : Win, △ : Win

# F I G. 4

Start

Input number n of participating teams and number t of teams to be picked out — ST1

Set number r2 of rounds of modified Swiss system — ST2

Set number r1 of rounds of random system — ST3

ST4
Range of i-th round of pairing to be generated ?

$r1 < i \leqq r$

$1 \leqq i \leqq r1$ — ST5

Generate pairing by random system

ST9
Generate pairing by modified Swiss system

Output pairing of i-th round — ST6

Update match result — ST7

ST8
End of i-th round ?

NO

YES

End

F I G. 5

FIG.6

EP 1 462 970 A2

F I G. 7

EP 1 462 970 A2

Start

Input number n of participating teams, number t of teams to be picked out, and total number r of rounds ～ST1x

Calculate number r1 of rounds of random system ～ST2x

Calculate number r2 (=r-r1) of rounds of modified = Swiss system ～ST3x

Range of i-th round of pairing to be generated ? ～ST4

r1< i ≦ r

1≦ i ≦ r1

Generate pairing by random system ～ST5

Generate pairing by modified Swiss system ～ST9

Output pairing of i-th round ～ST6

Update match result ～ST7

End of i-th round ? ～ST8

NO

YES

End

F I G . 8

FIG. 9

F I G. 10

FIG. 11